# EUROPEAN PATENT SPECIFICATION

(11) **EP 3 186 873 B1**
(45) Date of publication and mention of the grant of the patent: **20.06.2018**
(21) Application number: 15785197.3
(22) Date of filing: 19.08.2015
(51) Int. Cl.: H02K 7/18, H02K 7/116, A45C 5/14

(54) **APPARATUS FOR GENERATING ELECTRIC CURRENT**
VORRICHTUNG ZUR ERZEUGUNG VON STROM
APPAREIL POUR GÉNÉRER DU COURANT ÉLECTRIQUE

(30) Priority: 26.08.2014 IT CS20140024
(43) Date of publication of application: 05.07.2017
(73) Proprietor: SMART INNOVATION S.r.L, 88046 Lamezia Terme (CZ) (IT)
(72) Inventor: DE FAZIO, Vincenzo, 88046 Lamezia Terme (IT)
(74) Representative: Paparo, Aldo
(86) International application number: PCT/IT2015/000204
(87) International publication number: WO 2016/030916

(56) References cited:
- WO-A1-2011/154768
- US-A1- 2003 234 515
- US-A1- 2006 032 687
- US-A1- 2007 090 702
- US-A1- 2012 152 677
- US-A1- 2013 221 898
- US-A1- 2013 271 063

## Description

### TECHNICAL FIELD

The present invention concerns an apparatus for generating electric current with the aid of rotating elements.

The systems and tools to generate power by the rolling motion of a wheel are well known.

### BACKGROUND ART

Many of the known systems use small magnetic current generators actuated by suitable gears that allow to reach the angular speeds suitable to obtain specific intensity of electric current.

A first invention regarding such apparatus is described in the patent US 1,210,639 in which the generator is connected to a motorcycle wheel in order to produce electricity for the lights. Document US 2006/032687 discloses a related generator. This type of system is utilized to provide electric current to small devices that do not require high current intensities, a peculiarity of electronic devices such as cellphone, and others.

To provide electricity, said apparatuses must achieve high angular velocity and this is possible only in the presence of high transmission ratios, also in consideration that in most cases the rotor of generator is very small and it is equipped with knurled or toothed wheel with small diameter.

In the case of cycles and motorcycles, the right transmission ratio is guaranteed by the presence of a very large wheel that belongs to the means of transportation and one very small wheel that belongs to the rotor of generator.

In these cases, even if the means the transportation does not have an high speed, the high transmission ratio ensures an adequate number of revolution to rotor.

About what has been said, it's understandable that such systems are not applicable to small wheels and for low speed, except in the case where it uses a suitable sequence of gears.

This implies that, mounting this kind of systems on a small wheel, as in the case of suitcase, requires to create a very complex system of gear.
To confirm the above, there are the patents US2013/0271063 and US2006/0032687 that both treat the devices in question mounted on a suitcase.

From the study of above patents it's easily understood that the use of small wheels requires complicated system of toothed wheels.

These wheels must be appropriately placed in storage compartments and mechanically connected to the wheel axis.

This implies a total change of the means of transportation structure.

In the case of above patents, the suitcase is considerably transformed to make room for all the components of the invention.

This complicates the production cycle of the suitcase, imposing various supplementary operations to make the final product and also this configurations compromise the capacity of the suitcase

Furthermore, the fact that the mechanical connection between the main wheel and the gears occurs through the axis of rotation of the main wheel, requires the construction of complex systems that avoid to put in communication the inside of the suitcase with the outside just because the main wheel is always external to the suitcase and the transmission axis through the body of the suitcase penetrating the interior to reach the compartment of the gears thereby impairing the seal of the suitcase.

So it will be necessary to implement protective measures but it prejudice the ease of production and cost of the suitcase.

### DISCLOSURE OF INVENTION

The invention, as specified in the claims, solves these drawbacks, because with the invention is achieved a combined system composed of a sequence of toothed wheels mechanically connected to the surface of the wheel and not to the wheel axis.

The invention also provides that all the components, including the wheel of the means of locomotion, are placed in a single box frame in order to achieve the maximum integration between the components and to minimize space requirements.

According to the invention the apparatus is composed of a frame for the wheel, of a guide wheel and a body to generate current, mechanically connected to the wheel guide due to the force exerted by an elastic component.

### BRIEF DESCRIPTION OF DRAWING

The present invention will be better described with the help of drawings which represent only one of the possible embodiments:

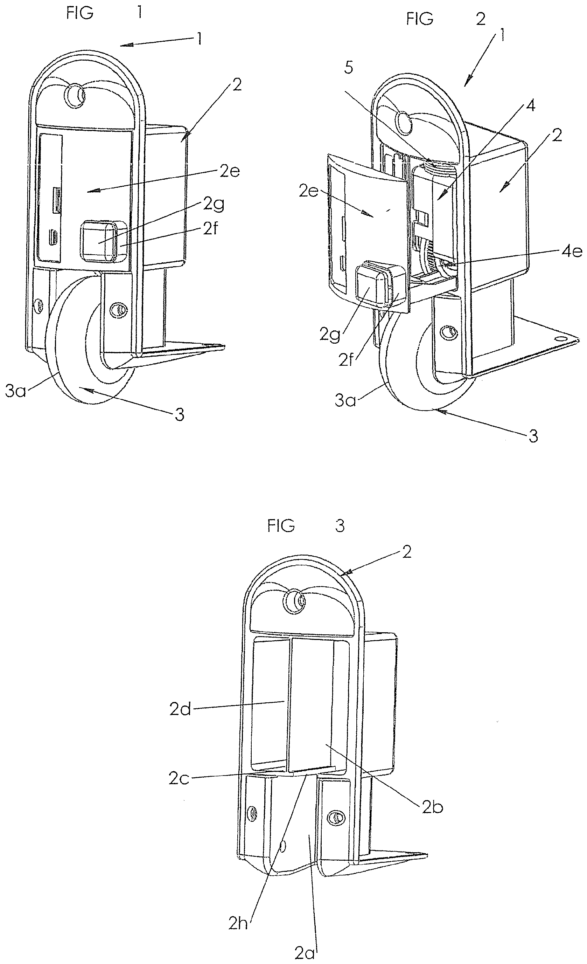

- Figure 1 is an isometric view of the apparatus assembled;
- Figure 2 is an exploded isometric view of the apparatus;
- Figure 3 is an isometric view of one of the components of the apparatus and in particular of the hull for the wheel;

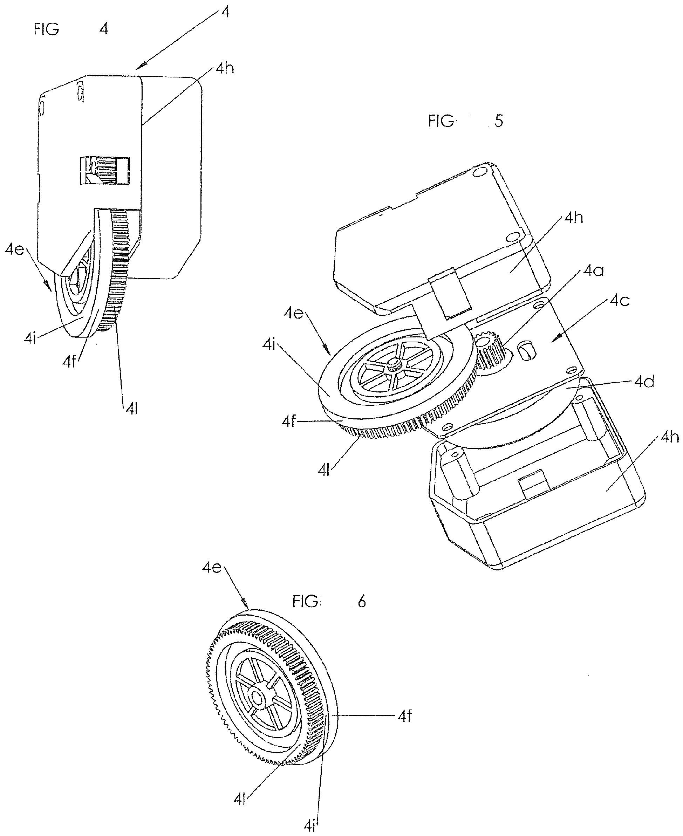

- Figure 4 is an axonometric view of the assembled current generator body;
- Figure 5 is an exploded axonometric view of the current generator body;
- Figure 6 is an axonometric view of one of the components of the generator body and in particular of the second toothed wheel;

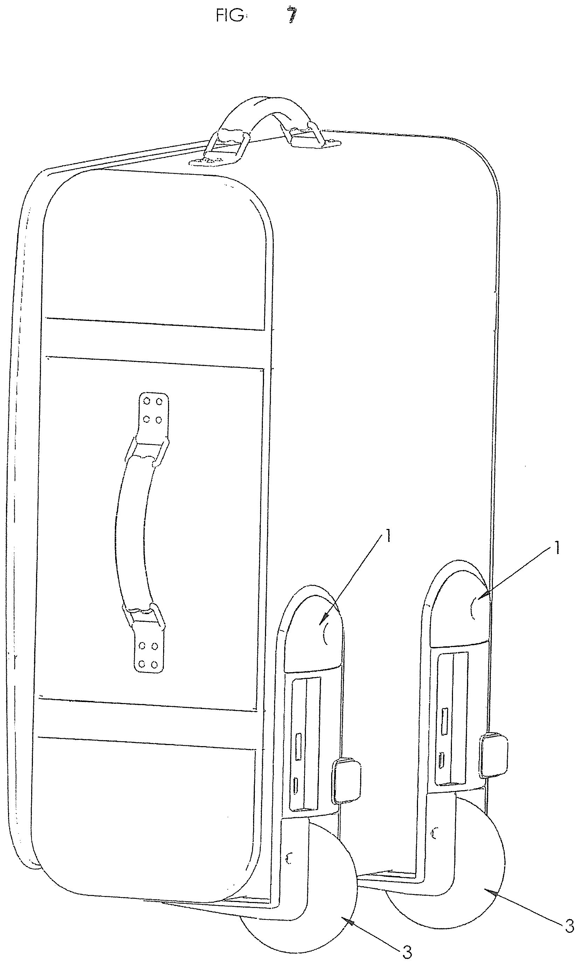

- Figure 7 is an axonometric view of the apparatus mounted on a suitcase;

With reference to the drawings an apparatus for producing electric current is indicated by **1.**

Said apparatus **1** comprises:
- a hull wheel **2** comprising:
   - A lower spray guard compartment **2a** adapted to contain, secured and free to rotate around its own center, the guide wheel **3;**
   - an upper compartment **2b** combined and superimposed on said lower spray guard compartment **2a,** by means of the connection wall **2c** of the compartments,
   - a closure cap **2e** for the open wall **2d** of the top compartment **2a,** suitable to ensure stable said current generator body **4** within the upper compartment **2a** and said closure cap **2e** comprising a housing **2f** for a pressure button **2g** suitable to lift the current generator body and to release the outer cylindrical surface **4f** of the second toothed wheel **4e** from contact with the tread surface **3a** of the guide wheel **3.**
- a guide wheel 3,
- a current generator body **4** composed of:
   - a rotating current generator **4c**;
   - a box frame **4h;**
   - a first toothed wheel **4a** placed in integral and concentric position with the rotor **4d** of the rotating current generator **4c** and
   - a second toothed wheel **4e** mechanically connected to the first toothed wheel **4a** being said second toothed wheel **4e** composed of an cylindrical upper part **4i** free from teeth and of a lower cylindrical portion **4l** equipped with teeth and said cylindrical portion **4i** joined and superimposed on the said cylindrical part **4l** being said cylindrical upper part **4i** with a larger diameter than the lower cylindrical portion **4l**

Said upper compartment 2b is adapted to receive in its interior the current generator body **4,** and leaves it free to slide vertically.

Said lower spray guard compartment **2a** and said upper compartment **2b** are communicating through a slot **2h** placed on the connection wall **2c** of the two compartments, and said slot **2h** is adapted to receive in the middle the accessible portion of the second toothed wheel **4e** of the current generator body **4.**

Said current generator body **4** is mechanically connected to the guide wheel **3,** by means of the thrust that the spring component **10** exerts on the box frame **4h** thus allowing the second toothed wheel **4e** to be in contact with the tread surface **3a** of the guide wheel **3.**

In this way the rolling motion of the guide wheel **3** is transmitted to the second gear **4e** and thereby to the first toothed wheel **4a.**

## Claims

1. Apparatus (1) for producing electric current composed of a hull (2) for a guide wheel (3), of a guide wheel (3), of a current generator body (4) said current generator body (4) being composed of a rotating current generator (4c), of a box frame (4h), of a first toothed wheel (4a) placed in a integral and concentric position with the rotor (4d) of the rotating current generator (4c) and of a second toothed wheel (4e) mechanically connected to the first toothed wheel (4a) and mechanically connected to the guide wheel (3), being said second toothed wheel (4e) held in contact with the tread surface (3a) of the guide wheel (3) by the thrust exerted by an elastic component (10) on the current generator body (4).
**CHARACTERIZED BY** THE FACT THAT:
- said second toothed wheel (4e) is composed of a cylindrical upper part (4i) free from teeth and of a cylindrical lower portion (4l) equipped with teeth and said cylindrical upper part (4i) superimposed and joined to said lower cylindrical portion (4l) being said cylindrical upper part (4i) with larger diameter than the cylindrical lower portion (4l) and
- said box frame (4h) of the current generator body (4), suitable to leave uncovered the second toothed wheel (4e) of a portion sufficient to allow free access to the outer cylindrical surface (4f) of the cylindrical upper part (4i) of the second toothed wheel (4e) from outside, and
- said hull (3) for the guide wheel (3) comprising:
• a lower spray guard compartment (2a) adapted to contain, secured and free to rotate around its own center, the guide wheel (3);
• an upper compartment (2b) joined and superimposed on said lower spray guard compartment (2a), by means of the connection wall (2c) of the compartments, being said upper compartment (2b) adapted to receive in its interior the current generator body (4), said current generator body (4) free to slide vertically within said upper compartment (2b) and positioned so as to the outer cylindrical surface (4f) of the second toothed wheel (4e) is in contact with the tread surface (3a) of the guide wheel (3), being said lower spray guard compartment (2a) and said upper compartment (2b) communicating through a slot (2h), placed on the connection wall (2c) of the compartments, and being said slot (2h) suitable to receive in the middle the accessible portion of the second toothed wheel (4e) of the current generator body (4).
• a closure cap (2e) for the open wall (2d) of the upper compartment (2a), suitable to ensure stable said current generator body (4) inside the upper compartment (2a) and said closure cap(2e) comprising at least one housing (2f) for at least a push button (2g) suitable to lift the current generator body and to release the outer cylindrical surface (4f) of the second toothed wheel (4e) from contact with the tread surface (3a) of the guide wheel (3).

2. Apparatus for producing electric current, AS CLAIMED IN CLAIM 1, **CHARACTERIZED BY** THE FACT THAT said cylindrical upper part (4i)of the second toothed wheel (4e) is made up of soft material as rubber.

3. Apparatus for producing electric current, AS CLAIMED IN CLAIM 1, **CHARACTERIZED BY** THE FACT THAT the upper compartment (2b) of the hull (2) for the guide wheel (3) is composed of at
least two compartments and suitable to contain electronic printed circuit boards, batteries and other electronic devices suitable to accumulate and use the electric current generated by the system.

4. Apparatus for producing electric current, AS CLAIMED IN CLAIMS 1 and 2, **CHARACTERIZED BY** THE FACT THAT the closure cap (2e) for the open wall (2d) of the upper compartment (2a) comprising appropriate slots suitable to receive inside the devices suited to the levy of the electric current.

5. Apparatus for producing electric current, AS CLAIMED IN CLAIMS 1,2,3, and 4, **CHARACTERIZED BY** THE FACT THAT the closure cap (2e) for the open wall (2d) of the upper compartment (2a) comprising at least one slot suitable for receiving inside an outlet Universal Serial Bus (USB) type.

6. Apparatus for producing electric current, AS CLAIMED IN CLAIMS 1,2,3,4, and 5, **CHARACTERIZED BY** THE FACT THAT the closure cap (2e) for the open wall (2d) of the upper compartment (2a) is suitable to provide an hermetic seal between said upper compartment (2a) and the external.

7. Apparatus for producing electric current, AS CLAIMED IN CLAIMS 1,2,3,4,5, and 6, **CHARACTERIZED BY** THE FACT THAT the closure cap (2e) for the open wall (2d) of the upper compartment (2a) is suitable to provide an hermetic seal between the compartments that make up the said upper compartment (2a).

8. Apparatus for producing electric current AS CLAIMED IN CLAIMS 1,2,3,4,5,6 and 7, **CHARACTERIZED BY** THE FACT THAT the apparatus (1) is installed on vehicles and devices suitable for the transport of goods and people.

9. Apparatus for producing electric current AS CLAIMED IN CLAIMS 1,2,3,4,5,6, and 7, **CHARACTERIZED BY** THE FACT THAT the apparatus (1) is installed on devices suitable to generate heat by means of electrical resistances.

10. Apparatus for producing electric current AS CLAIMED IN CLAIMS 1,2,3,4,5,6, and 7, **CHARACTERIZED BY** THE FACT THAT the apparatus (1) is installed on devices suitable to generate electric arcs.

## Patentansprüche

1. Vorrichtung (1) zur Erzeugung von elektrischem Strom, bestehend aus einem Rumpf (2) für ein Führungsrad (3), einem Führungsrad (3), einem Stromgeneratorkörper (4), wobei der Stromgeneratorkörper (4) aus einem rotierenden Stromgenerator (4c) und einem Kastenrahmen (4h) eines ersten Zahnrades (4a), das in einer integralen und konzentrischen Position mit dem Rotor (4d) des rotierenden Stromgenerators (4c) angeordnet ist, und eines zweiten Zahnrades (4e), das mechanisch mit dem ersten Zahnrad (4a) verbunden und mechanisch mit dem Führungsrad (3) verbunden ist, besteht, wobei das zweite Zahnrad (4e) in Kontakt mit der Lauffläche (3a) des Führungsrades (3) durch den von einer elastischen Komponente (10) auf den Stromgeneratorkörper (4) ausgeübten Druck gehalten wird.
**DADURCH GEKENNZEICHNET, DASS**:
- das zweite Zahnrad (4e) aus einem zylindrischen Oberteil (4i) ohne Zähne und einem zylindrischen unteren Abschnitt (41) versehen mit Zähnen besteht und der zylindrische Oberteil (4i) überlagert und an den unteren zylindrischen Abschnitt (41) angeschlossen ist, wobei das zylindrische Oberteil (4i) einen größeren Durchmesser als der zylindrische Unterteil (41) aufweist, und
- der Kastenrahmen (4h) des Stromgeneratorkörpers (4), der geeignet ist, einen Abschnitt des zweiten Zahnrades (4e) frei zu lassen, der ausreicht, um einen freien Zugang zu der äußeren zylindrischen Oberfläche (4f) des zylindrischen Oberteils (4i) des zweiten Zahnrades (4e) von außen zu ermöglichen, und wobei der Rumpf (3) für das Führungsrad (3) umfasst:
• ein unteres Spritzschutzfach (2a), das angepasst ist, das gesicherte und frei um seine eigene Mitte drehende Führungsrad (3) aufzunehmen;
• ein oberes Fach (2b), das mittels der Verbindungswand (2c) der Fächer an das untere Spritzschutzfach (2a) angeschlossen und überlagert ist, wobei das obere Fach (2b) angepasst ist, um in seinem Inneren den Stromgeneratorkörper (4) aufzunehmen, wobei der Stromgeneratorkörper (4) innerhalb des oberen Fachs (2b) vertikal gleiten kann und so positioniert ist, dass die äußere zylindrische Oberfläche (4f) des zweiten Zahnrades (4e) in Kontakt mit der Lauffläche (3a) des Führungsrades (3) ist, wobei das untere Spritzschutzfach (2a) und das obere Fach (2b) durch einen Schlitz (2h) kommunizieren, der an der Verbindungswand (2c) der Fächer angeordnet ist, und wobei der Schlitz (2h) geeignet ist, den zugänglichen Abschnitt des zweiten Zahnrades (4e) des Stromgeneratorkörpers (4) in der Mitte aufzunehmen.
• eine Verschlusskappe (2e) für die offene Wand (2d) des oberen Fachs (2a), die geeignet ist, den Stromgeneratorkörper (4) innerhalb des oberen Fachs (2a) stabil zu halten, und wobei die Verschlusskappe (2e) mindestens ein Gehäuse (2f) für mindestens einen Druckknopf (2g) umfasst, der geeignet ist, den Stromgeneratorkörper anzuheben und die äußere zylindrische Oberfläche (4f) des zweiten Zahnrades (4e) vom Kontakt mit der Lauffläche (3a) des Führungsrades (3) zu lösen.

2. Vorrichtung zur Erzeugung von elektrischem Strom, NACH ANSPRUCH 1, **DADURCH GEKENNZEICHNET, DASS** der zylindrische Oberteil (4i) des zweiten Zahnrades (4e) aus weichem Material wie Gummi hergestellt ist.

3. Vorrichtung zur Erzeugung von elektrischem Strom, NACH ANSPRUCH 1, **DADURCH GEKENNZEICHNET, DASS** das obere Fach (2b) des Rumpfes (2) für das Führungsrad (3) aus mindestens zwei Fächern besteht und geeignet ist, elektronische Leiterplatten, Batterien und andere elektronische Geräte aufzunehmen, die geeignet sind, den durch das System erzeugten elektrischen Strom zu speichern und zu verwenden.

4. Vorrichtung zur Erzeugung von elektrischem Strom, NACH ANSPRUCH
1 und 2, **DADURCH GEKENNZEICHNET, DASS** die Verschlusskappe (2e) für die offene Wand (2d) des oberen Fachs (2a) angemessene Schlitze umfasst, die geeignet sind, innerhalb der für die Abgabe des elektrischen Stroms geeigneten Geräte aufzunehmen.

5. Vorrichtung zur Erzeugung von elektrischem Strom, NACH ANSPRUCH 1,2,3 und 4, **DADURCH GEKENNZEICHNET, DASS** die Verschlusskappe (2e) für die offene Wand (2d) des oberen Fachs (2a) mindestens einen Schlitz umfasst, der zur Aufnahme innerhalb einer Steckdose vom Typ Universal Serial Bus (USB) geeignet ist.

6. Vorrichtung zur Erzeugung von elektrischem Strom, NACH ANSPRUCH 1,2,3,4 und 5, **DADURCH GEKENNZEICHNET, DASS**, die Verschlusskappe (2e) für die offene Wand (2d) des oberen Fachs (2a) geeignet ist, eine hermetische Abdichtung zwischen dem oberen (2a) und dem äußeren Fach bereitzustellen.

7. Vorrichtung zur Erzeugung von elektrischem Strom, NACH ANSPRUCH
1,2,3,4,5 und 6, **DADURCH GEKENNZEICHNET, DASS** die Verschlusskappe (2e) für die offene Wand (2d) des oberen Fachs (2a) geeignet ist, eine hermetische Abdichtung zwischen den Fächern, die das obere Fach (2a) ausmachen, herzustellen.

8. Vorrichtung zur Erzeugung von elektrischem Strom NACH ANSPRUCH 1,2,3,4,5,6 und 7, **DADURCH GEKENNZEICHNET, DASS** die Vorrichtung (1) an Fahrzeugen und Geräten installiert ist, die für den Transport von Gütern und Personen geeignet sind.

9. Vorrichtung zur Erzeugung von elektrischem Strom NACH ANSPRUCH 1,2,3,4,5,6 und 7, **DADURCH GEKENNZEICHNET, DASS** die Vorrichtung (1) auf Geräten installiert ist, die geeignet sind, mittels elektrischer Widerstände Wärme zu erzeugen.

10. Vorrichtung zur Erzeugung von elektrischem Strom, NACH ANSPRUCH 1, 2, 3, 4, 5, 6, und 7 **DADURCH GEKENNZEICHNET, DASS** die Vorrichtung (1) auf Geräten installiert ist, die zur Erzeugung von Lichtbögen geeignet sind.

## Revendications

1. Appareil (1) servant à produire un courant électrique composé d'une coque (2) pour une roue de guidage (3), d'une roue de guidage (3) d'un corps de dynamo (4), ledit corps de dynamo (4) étant composé d'une génératrice de courant rotatif (4c), d'une carcasse fermée (4h) d'une première roue dentée (4a) placée dans une position solidaire et concentrique avec le rotor (4d) de la génératrice de courant rotatif (4c) et d'une seconde roue dentée (4e) mécaniquement reliée à la première roue dentée (4a) et mécaniquement reliée à la roue de guidage (3), ladite seconde roue dentée (4e) étant maintenue en contact avec la surface de bande de roulement (3a) de la roue de guidage (3) par la poussée exercée par un composant élastique (10) sur le corps de la dynamo (4).
**CARACTÉRISÉ EN CE QUE** :
- ladite seconde roue dentée (4e) est composée d'une partie cylindrique supérieure (4i) sans dents et d'une partie cylindrique inférieure (41) équipée de dents et de ladite partie cylindrique supérieure (4i) superposée et unie à ladite partie cylindrique inférieure (41), ladite partie cylindrique supérieure (4i) ayant un diamètre supérieur à la partie cylindrique inférieure (41) et
- ladite carcasse fermée (4h) du corps de dynamo (4) est adaptée pour laisser découverte une partie suffisante de la seconde roue dentée (4e) pour permettre l'accès libre de l'extérieur à la surface cylindrique extérieure (4f) de la partie cylindrique supérieure (4i) de la seconde roue dentée (4e), et ladite coque (3) pour la roue de guidage (3) comprenant :
• un compartiment anti-pulvérisation inférieur (2a) adapté pour contenir, sécurisée et libre de tourner autour de son propre centre, la roue de guidage (3) ;
• un compartiment supérieur (2b) uni à et superposé sur ledit compartiment anti-pulvérisation inférieur (2a) au moyen de la paroi de raccordement (2c) des compartiments, ledit compartiment supérieur (2b) étant adapté pour recevoir en son sein le corps de dynamo (4), ledit corps de dynamo, (4) libre de coulisser verticalement à l'intérieur dudit compartiment supérieur (2b) et positionné de manière à ce que la surface cylindrique supérieure (4f) de la seconde roue dentée (4e) soit en contact avec la surface de bande de roulement (3a) de la roue de guidage (3), ledit compartiment anti-pulvérisation inférieur (2a) et ledit compartiment supérieur (2b) étant en communication par l'intermédiaire d'une fente (2h) placée sur la paroi de raccordement (2c) des compartiments, et ladite fente (2h) étant adaptée pour recevoir au milieu la partie accessible de la seconde roue dentée (4e) du corps de dynamo (4).
• un capuchon de fermeture (2e) pour la paroi d'ouverture (2d) du compartiment supérieur (2a), adapté pour garantir la stabilité dudit corps de dynamo (4) à l'intérieur du compartiment supérieur (2a) et ledit capuchon de fermeture (2e) comprenant au moins un logement (2f) pour au moins un bouton poussoir (2g) adapté pour lever le corps de dynamo et pour libérer la surface cylindrique extérieure (4f) de la seconde roue dentée (4e) du contact avec la surface de bande de roulement (3a) de la roue de guidage (3).

2. Appareil servant à produire un courant électrique SELON LA REVENDICATION 1, **CARACTÉRISÉ EN CE QUE** ladite partie cylindrique supérieure (4i) de la seconde roue dentée (4e) est constituée d'un matériau souple comme du caoutchouc.

3. Appareil servant à produire un courant électrique SELON LA REVENDICATION 1, **CARACTÉRISÉ EN CE QUE** le compartiment supérieur (2b) de la coque (2) pour la roue dentée (3) est composé d'au moins deux compartiments et adapté pour contenir des cartes de circuit imprimé électronique, des batteries et d'autres dispositifs électroniques pouvant accumuler et utiliser le courant électrique généré par le système.

4. Appareil servant à produire un courant électrique SELON
LES REVENDICATIONS 1 et 2, **CARACTÉRISÉ EN CE QUE** le capuchon de fermeture (2e) pour la paroi d'ouverture (2d) du compartiment supérieur (2a) comprend des fentes appropriées adaptées à recevoir à l'intérieur des dispositifs appropriés au prélèvement du courant électrique.

5. Appareil servant à produire un courant électrique SELON LES REVENDICATIONS 1, 2, 3 et 4, **CARACTÉRISÉ EN CE QUE** le capuchon de fermeture (2e) pour la paroi d'ouverture (2d) du compartiment supérieur (2a) comprend au moins une fente adaptée pour recevoir à l'intérieur un type de bus série universel (USB) de sortie.

6. Appareil servant à produire un courant électrique SELON LES REVENDICATIONS 1, 2, 3, 4 et 5 **CARACTÉRISÉ EN CE QUE** le capuchon de fermeture (2e) pour la paroi d'ouverture (2d) du compartiment supérieur (2a) est adapté pour assurer l'étanchéité entre ledit compartiment supérieur (2a) et l'extérieur.

7. Appareil servant à produire un courant électrique SELON
LES REVENDICATIONS 1, 2, 3, 4, 5 et 6 **CARACTÉRISÉ EN CE QUE** le capuchon de fermeture (2e) pour la paroi d'ouverture (2d) du compartiment supérieur (2a) est adapté pour assurer l'étanchéité entre les compartiments composant ledit compartiment supérieur (2a) .

8. Appareil servant à produire un courant électrique SELON LES REVENDICATIONS 1, 2, 3, 4, 5, 6 et 7 **CARACTÉRISÉ EN CE QUE** l'appareil (1) est installé sur des véhicules et des appareils destinés au transport de marchandises et de personnes.

9. Appareil servant à produire un courant électrique SELON LES REVENDICATIONS 1, 2, 3, 4, 5, 6 et 7 **CARACTÉRISÉ EN CE QUE** l'appareil (1) est installé sur des appareils pouvant générer de la chaleur au moyen de résistances électriques.

10. Appareil servant à produire un courant électrique SELON LES REVENDICATIONS 1, 2, 3, 4, 5, 6 et 7 **CARACTÉRISÉ EN CE QUE** l'appareil (1) est installé sur des appareils pouvant générer des arcs électriques.
